# EUROPÄISCHE PATENTSCHRIFT

(11) **EP 2 273 871 B1**
(45) Veröffentlichungstag und Bekanntmachung des Hinweises auf die Patenterteilung: **08.05.2013**
(21) Anmeldenummer: 09725576.4
(22) Anmeldetag: 13.03.2009
(51) Int. Cl.: A01N 1/02, B01L 3/00

(54) **VERFAHREN UND VORRICHTUNG ZUR HERSTELLUNG VON GEFRORENEN BIOLOGISCHEN PARTIKELN**
METHOD AND DEVICE FOR PRODUCING FROZEN BIOLOGICAL PARTICLES
PROCÉDÉ ET DISPOSITIF POUR FABRIQUER DES PARTICULES BIOLOGIQUES CONGELÉES

(30) Priorität: 28.03.2008 DE 102008016217
(43) Veröffentlichungstag der Anmeldung: 19.01.2011
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 66386 St. Ingbert (DE)
(74) Vertreter: Hertz, Oliver
(86) Internationale Anmeldenummer: PCT/EP2009/001852
(87) Internationale Veröffentlichungsnummer: WO 2009/118110

(56) Entgegenhaltungen:
- EP-A2- 1 741 336
- WO-A1-00/54584
- WO-A1-03/065014
- WO-A2-03/029480
- WO-A2-2008/092619

## Beschreibung

Die Erfindung betrifft ein Verfahren zur Herstellung einer Vielzahl von gefrorenen biologischen Partikeln, insbesondere ein Verfahren zur Herstellung von Partikeln, die biologische Zellen, Zellgruppen und/oder Zellbestandteile in einem Suspensionsmedium im gefrorenen Zustand enthalten, wobei die Partikel vorbestimmte geometrische Eigenschaften aufweisen und für eine Implantation in biologisches Material, wie zum Beispiel biologisches Gewebe geeignet sind. Die Erfindung betrifft des Weiteren eine Einfriervorrichtung, die zur Herstellung der biologischen Partikel eingerichtet ist. Anwendungen der Erfindung sind bei der Deposition von Zellen, Zellgruppen oder Zellbestandteilen in biologischem Material, insbesondere Gewebe, Zellkulturen oder Implantaten gegeben.

Es ist allgemein bekannt, biologische Proben, wie zum Beispiel biologische Zellen, im gefrorenen Zustand dauerhaft zu lagern (Kryokonservierung). Während der Lagerung bleibt der Zustand der biologischen Proben erhalten. Nach einem Auftauen stehen die biologischen Proben in einem lebensfähigen Zustand für die gewünschte Anwendung zur Verfügung. Nachfolgende Anwendungen umfassen beispielsweise eine Untersuchung und/oder eine Kultivierung der Zellen. Bei einer in vitro-Kultivierung werden die biologischen Proben nach dem Auftauen in einem Kultivierungsgefäß kultiviert. Für eine in vivo-Kultivierung erfolgt eine Einbettung der biologischen Probe zum Beispiel in ein lebendes biologisches Gewebe, in dem die Kultivierung erfolgt. Die Einbettung kann im aufgetauten Zustand oder im gefrorenen Zustand erfolgen.

Die Einbettung von gefrorenen biologischen Proben in biologisches Gewebe kann unter Verwendung eines Transferwerkzeugs erfolgen, das in US 2006/0134600 A1 beschrieben ist. Diese Technik ist jedoch extrem zeitaufwändig, so dass Nachteile für eine routinemäßige Deposition großer Zellzahlen unter praktischen Bedingungen auftreten können. Alternativ können die biologischen Proben als gefrorene Partikel mit einer Depositionsvorrichtung in das biologische Gewebe eingeschossen werden, wie in DE 10 2007 004 855 (deutsche Patentanmeldung, unveröffentlicht am Prioritätstag der vorliegenden Anmeldung) beschrieben ist. Vorteilhafterweise sind die gefrorenen Partikel für die Ausübung einer Antriebskraft und ein Einschießen in das biologische Gewebe mechanisch ausreichend stabil.

Typischerweise soll nicht nur eine einzelne biologische Probe in Gewebe eingebettet werden, sondern eine Vielzahl von Proben in einem Gewebebereich verteilt angeordnet werden. Es besteht ein Interesse, die Einbettung für alle Proben unter möglichst reproduzierbaren, insbesondere gleichen Bedingungen durchzuführen. Beispielsweise soll die Zusammensetzung der Proben (zum Beispiel Art, Anzahl der Zellen) und die Einbettungstiefe (zum Beispiel bei einer Einbettung in Muskelgewebe) möglichst genau einstellbar sein. Diese Anforderungen konnten mit den oben genannten Verfahren nur beschränkt erfüllt werden. So werden die Partikel zum Einschießen mit der Depositionsvorrichtung durch ein Einfrieren von freien Tropfen in einer kalten Atmosphäre hergestellt, wobei eine Tropfengröße oder -form nicht reproduzierbar einstellbar ist.

Es ist ferner bekannt, zur Kryokonservierung biologischer Proben Substratplatten mit Substratnäpfen zu verwenden, die zur Aufnahme von einzelnen Proben vorgesehen sind (siehe z. B. US 2006/0154232 A1). Die herkömmlichen Substrate sind für die Bereitstellung von gefrorenen Partikeln für die Deposition in biologisches Material nur beschränkt geeignet, da die Proben nicht beschädigungsfrei aus den Kompartimenten im gefrorenen Zustand entnommen werden können. Aus der DE 199 21 236 A1 ist das Einfrieren von Kryoproben auf oberflächenstrukturierten Substraten bekannt. Die Oberflächenstruktur bewirkt eine Formgebung der Proben aber auch deren feste Verankerung im gefrorenen Zustand auf dem Substrat. Es ist auch bekannt, biologische Proben auf Substraten als freie Tropfen einzufrieren (siehe DE 10 2005 031 648 A1). Bei dieser Technik ist jedoch von Nachteil, dass die geometrischen Eigenschaften der Tropfen im Wesentlichen durch die Oberflächenspannung der Proben vor dem Einfrieren bestimmt wird. Die Herstellung einer Vielzahl von gefrorenen Partikeln mit einer vorbestimmten Außenform und einer vorbestimmten Größe ist mit diesem Verfahren nur beschränkt möglich.

Die Aufgabe der Erfindung ist es, ein verbessertes Verfahren zur Herstellung von gefrorenen biologischen Partikeln, insbesondere zur Deposition in biologischem Material, bereitzustellen, mit dem die Beschränkungen der herkömmlichen Techniken überwunden werden. Die erfindungsgemäß hergestellten biologischen Partikel sollen insbesondere für eine Deposition unter reproduzierbaren und/oder gleichartigen Bedingungen geeignet sein. Die Aufgabe der Erfindung ist es auch, eine verbesserte Einfriervorrichtung bereitzustellen, die zur Herstellung von gefrorenen Partikeln eingerichtet ist.

Diese Aufgaben werden durch ein Verfahren und eine Vorrichtung mit den Merkmalen der unabhängigen Ansprüche gelöst. Vorteilhafte Ausführungsformen und Anwendungen der Erfindung ergeben sich aus den abhängigen Ansprüchen.

Verfahrensbezogen beruht die Erfindung auf der allgemeinen technischen Lehre, eine Vielzahl gefrorener biologischer Partikel herzustellen, indem Teilportionen einer Zellsuspension (Suspension mit einer zellulären Komponente, die mindestens eines von mindestens einer biologischen Zelle, mindestens einer Zellgruppe und mindestens einem Zellbestandteil umfasst) in Aufnahmeelementen einer Trägereinrichtung angeordnet und in diesen in einen gefrorenen Zustand überführt werden, wobei die geometrischen Eigenschaften der Teilportionen und der aus diesen gebildeten gefrorenen biologischen Partikel durch die innere Größe und Form der Aufnahmeelemente bestimmt wird. Die gewünschten gefrorenen biologischen Partikel werden dann durch eine Trennung der Teilportionen im gefrorenen Zustand von den Aufnahmeelementen bereitgestellt. Vorteilhafterweise ist die Form und Größe der gefrorenen biologischen Partikel im wesentlichen komplementär zur Innenform der Aufnahmeelemente. Die Zusammensetzung der gefrorenen biologischen Partikel hängt von der zellulären Komponente ab, vorzugsweise bilden die Partikel feste Kulturmedium-Zell-Körper.

Vorrichtungsbezogen wird die Aufgabe durch eine Einfriervorrichtung gelöst, die eine Trägereinrichtung mit einer Vielzahl von Aufnahmeelementen zur Aufnahme von Teilportionen einer flüssigen Zellsuspension und eine Kühleinrichtung umfasst, mit der die Aufnahmeelemente kühlbar sind. Die Kühleinrichtung ist erfindungsgemäß zur Einstellung einer Temperatur der gefrorenen Teilportionen unterhalb von -30°C eingerichtet. Die Aufnahmeelemente sind so konfiguriert, dass die gefrorenen biologischen Partikel von den Aufnahmeelementen so trennbar sind, dass die gewünschten geometrischen Eigenschaften der Partikel erhalten bleiben. Vorteilhafterweise ermöglicht die Einfriervorrichtung ein Einfrieren der Teilportionen der Suspension in den Aufnahmeelementen und die Trennung der gefrorenen Partikel von den Aufnahmeelementen, ohne dass die Form und Größe der Partikel verändert wird. Die Partikel sind beschädigungsfrei von den Aufnahmeelementen trennbar. Die erfindungsgemäße Einfriervorrichtung ermöglicht die reproduzierbare Einstellung von Form und Größe der Teilportionen. Die mit der Einfriervorrichtung hergestellten Partikel ermöglichen eine homogene und reproduzierbare Deposition in biologischem Material.

Ein wichtiger Vorteil der Erfindung besteht darin, dass mit der Wahl der Aufnahmeelemente die Form und Größe der biologischen Partikel eingestellt werden kann. Damit kann die Bewegung der biologischen Partikel bei der Deposition in biologischem Material und/oder die Einbettung der biologischen Partikel in das biologische Material sowie die Wechselwirkung mit diesem beeinflusst werden. Die reproduzierbare Einstellung von Form und Größe der biologischen Partikel war mit herkömmlichen Verfahren nicht möglich, da bei diesen zum Beispiel eine Beschädigung der Partikel bei der Trennung aus Substratnäpfen auftreten würde oder die geometrischen Partikeleigenschaften beim Einsprühen einer Suspension in eine kalte Atmosphäre starken Variationen unterzogen war.

Die Aufnahmeelemente sind zur Aufnahme der Teilportionen der Zellsuspension eingerichtet. Jede Teilportion wird zumindest teilweise durch eine Innenoberfläche des zugehörigen Aufnahmeelements eingeschlossen. Die Oberfläche der Teilportion ist komplementär zur Innenoberfläche des Aufnahmeelements. In Abhängigkeit von der Gestaltung der Trägereinrichtung kann das Aufnahmeelement ein- oder mehrseitig offen sein. An offenen Seiten des Aufnahmeelements wird die Oberfläche der Teilportion durch die Wirkung der Oberflächenspannung eingestellt. Die Form und Größe des Aufnahmeelements wird dem biologischen Partikel aufgeprägt. Es ist eine mehr- oder allseitige Formung der biologischen Partikel durch die Aufnahmeelemente vorgesehen. Mindestens ein Drittel, vorzugsweise mindestens die Hälfte der Oberfläche der Teilportion berührt die Innenoberfläche des Aufnahmeelements.

Vorzugsweise weisen die Aufnahmeelemente eine Größe derart auf, dass die Teilportionen der Suspension unter der Wirkung von Kapillarkräften in den Aufnahmeelementen haften. Dies vereinfacht die Zufuhr und Portionierung der Zellsuspension an den Aufnahmeelementen. Typischerweise sind die Aufnahmeelemente so dimensioniert, dass mindestens eine Querschnittsdimension der Aufnahmeelemente kleiner als 5 mm, vorzugsweise kleiner als 1 mm ist.

Vorteilhafterweise kann die Innenform der Aufnahmeelemente in frei gewählt werden. Es können insbesondere eine Kugelform, eine Halbkugelform, eine Quaderform, eine Ellipsoidform, eine Stabform, eine Pyramidenform, eine Kegelform, eine Spitzenform, eine Form mit einer Vielzahl von Spitzen oder Kombinationen aus diesen Formen vorgesehen sein. Vorteilhaft ist eine Form, die für die Wechselwirkung der gefrorenen biologischen Partikel mit dem biologischen Material bei der Deposition bzw. der Einbettung darin optimiert ist. Vorzugsweise werden die gefrorenen Partikel durch die Aufnahmeelemente so geformt, dass ein Eindringen der Partikel in Gewebe oder der Flug dorthin während der Deposition erleichtert wird.

Für die Trennbarkeit des gefrorenen biologischen Partikels aus dem Aufnahmeelement ist es jedoch von Bedeutung, dass die Innenform des Aufnahmeelements eine Bewegung (z. B. Verschiebung) des Partikels aus dem Aufnahmeelement heraus ermöglicht. In einer Bewegungsrichtung hin zu einer offenen Seite des Aufnahmeelements hat die Innenform mindestens eine konstante, vorzugsweise jedoch eine sich erweiternde Querschnittsfläche. Des Weiteren ist es für die Trennbarkeit des gefrorenen biologischen Partikels aus dem Aufnahmeelement von Vorteil, wenn die Aufnahmeelemente eine Innenoberfläche mit einer der geringern Haftfähigkeit aufweisen, dass eine mechanische Ablösung der gefrorenen biologischen Partikel von den Aufnahmeelementen gefördert wird.

Gemäß einer bevorzugten Ausführungsform der Erfindung weist die Trägereinrichtung eine Lochplatte (Gitterstruktur, Netzstruktur) auf, in der die Aufnahmeelemente als durchgehende Löcher gebildet sind. Zur Aufnahme der Teilportionen in den Aufnahmeelementen wird die Zellsuspension auf die Lochplatte geleitet. Unter der Wirkung von Kapillarkräften sammeln sich die Teilportionen in den Aufnahmeelementen, während überschüssige Suspension abfließt und aufgefangen wird. Die Aufnahme der Teilportionen vereinfacht sich somit vorteilhafterweise. Mit der Innenform der Löcher der Lochplatte wird die Form und Größe der Teilportionen und der gefrorenen Partikel eingestellt.

Gemäß einer alternativen Ausführungsform der Erfindung weist die Trägereinrichtung eine Substratplatte mit einer freien Oberfläche auf, in der die Aufnahmeelemente als Vertiefungen gebildet sind. Die Suspension kann auf die Oberfläche aufgegossen werden, wobei sich die Aufnahmeelemente füllen, während überschüssige Teile der Suspension abfließen und aufgefangen werden. Mit der Innenform der Vertiefungen werden die geometrischen Eigenschaften der Teilportionen eingestellt.

Ein wichtiges Merkmal der Erfindung besteht in der Trennbarkeit der gefrorenen Partikel von den Aufnahmeelementen unter Beibehaltung der geometrischen Eigenschaften der gefrorenen Partikel. Vorteilhafterweise bestehen verschiedene Varianten, die gefrorenen Partikel von den Aufnahmeelementen zu trennen. Gemäß einer ersten Variante kann eine Deformation der Trägereinrichtung vorgesehen sein. Die Deformation der Trägereinrichtung kann eine Verbiegung beispielsweise der Lochplatte oder der Substratplatte umfassen, unter deren Wirkung die gefrorenen Teilportionen von den Aufnahmeelementen abplatzen. Vorteilhafterweise wird damit die Bereitstellung der gefrorenen Partikel vereinfacht. Die Verbiegung kann zum Beispiel durch eine Krafteinwirkung an Rändern der Trägereinrichtung oder ein Ziehen der Trägereinrichtung über eine Kante erfolgen. Gemäß einer zweiten Variante kann vorgesehen sein, dass die Teilportionen aus den Aufnahmeelementen mit einer Trenneinrichtung gedrückt oder geschoben werden. Die Trenneinrichtung umfasst zum Beispiel eine Vielzahl von Stempeln, die entsprechend der geometrischen Anordnung der Aufnahmeelemente angeordnet sind, oder ein Rakelwerkzeug, mit dem die Partikel aus den Aufnahmeelementen gedrückt werden können. Mit der Trenneinrichtung können die Teilportionen aus den Löchern der Lochplatte getrennt werden.

Gemäß einer bevorzugten Weiterbildung der Erfindung können die Teilportionen hinsichtlich der geometrischen Verteilung ihrer Zusammensetzung modifiziert werden. Durch eine solche Modifizierung kann beispielsweise eine inhomogene Zusammensetzung innerhalb der einzelnen Teilportionen gezielt eingestellt werden. Solche Modifizierungen umfassen beispielsweise eine Einstellung der geometrischen Anordnung der zellulären Komponente innerhalb der Teilportionen, die Bildung eines gefüllten oder ungefüllten Hohlraumes innerhalb der Teilportionen, eine Beschichtung der gefrorenen Teilportionen oder eine Hinzufügung einer Festkörperkomponente zu den Teilportionen. Verschiedene Modifizierungen, die auch miteinander kombiniert werden können, werden im folgenden beispielhaft beschrieben. Die Modifizierungen können auf einzelne, mehrere oder alle Teilportionen angewendet werden.

Gemäß einer bevorzugten Ausführungsform der Erfindung kann eine Einstellung der geometrischen Anordnung der zellulären Komponente in den Teilportionen, insbesondere eine Positionierung der mindestens einen Zelle (oder des mindestens einen Zellbestandteils) oder der mindestens einen Zellgruppe in den Teilportionen vorgesehen sein. Hierzu ist mindestens eines der Aufnahmeelemente mit einer Stelleinrichtung ausgestattet, mit der die zellulären Komponente durch mechanische, elektrische und/oder magnetische Kräfte in der Teilportion verschoben werden kann, bevor diese eingefroren wird. Vorteilhafterweise ermöglicht diese Ausführungsform der Erfindung eine inhomogene Verteilung der zellulären Komponente in den gefrorenen Partikeln. Die zellulären Komponente kann beispielsweise bevorzugt in der Mitte der Teilportionen gesammelt werden, wo ein verbesserter Schutz gegen mechanische Einwirkungen gegeben ist. Des Weiteren kann die zelluläre Komponente in vorbestimmter Weise relativ zu bestimmten Formelementen der Teilportionen angeordnet werden, um beispielsweise die Lage der zellulären Bestandteile im biologischen Material nach dem Auftauen der biologischen Partikel zu beeinflussen.

Gemäß einer weiteren vorteilhaften Ausführungsform der Erfindung kann vorgesehen sein, dass in mindestens einer der Teilportionen mindestens ein Hohlraum gebildet wird. Der Hohlraum kann für eine Beobachtung der Deposition der gefrorenen Partikel in dem biologischen Material mit einem Ultraschall-Bildgebungsverfahren und/oder für eine Beeinflussung des Auftauens der biologischen Partikel im biologischen Material von Vorteil sein. Beispielsweise kann gemäß einer Variante ein Hohlraum über eine Hohlleitung mit einem verflüssigten Gas gefüllt werden. Beim Auftauen im biologischen Material geht der Inhalt des Hohlraums in den gasförmigen Zustand über, wodurch ein Zerplatzen des biologischen Partikels und dessen Zerkleinerung in einzelne Partikelteile erfolgt.

Gemäß einer weiteren Modifizierung kann erfindungsgemäß mindestens einer der Teilportionen mindestens ein Festkörperelement zugefügt werden. Das Festkörperelement wird in die Teilportion eingeführt, wenn diese sich in dem Aufnahmeelement vor der Abkühlung noch im flüssigen Zustand befindet. Vorteilhafterweise kann somit im biologischen Partikel die zellulären Komponente mit Zusatzstoffen, wie zum Beispiel Füllstoffen oder Wirkstoffen kombiniert werden. Mit dem mindestens einen Festkörperelement kann die Kultivierung der zellulären Komponente im biologischen Material beeinflusst werden. Vorteilhafterweise sind verschiedene Varianten von Festkörperelementen möglich, die in die Teilportionen eingebettet werden. Festkörperelemente können zum Beispiel Festkörperpartikel und/oder Gewebeelemente umfassen. Vorteilhafterweise können die Aufnahmeelemente mit Halteeinrichtungen ausgestattet sein, die zur Halterung des Festkörperelemente in den Teilportionen in den Aufnahmeelementen eingerichtet sind.

Gemäß einer weiteren Ausführungsform der Erfindung kann eine Beschichtung der gefrorenen biologischen Partikel vorgesehen sein. Auf die gefrorenen biologischen Partikel wird nach deren Trennung von den Aufnahmeelementen mit einer Beschichtungseinrichtung mindestens eine Schicht einer Substanz aufgebracht, die geeignet ist, das Auftauen im biologischen Material, die Kultivierung oder die chemische Umgebung der zellulären Komponente im biologischen Material zu beeinflussen. Besonders bevorzugt ist die Bildung von mindestens einer Schicht mit mindestens einer Wirksubstanz. Die Wirksubstanz umfasst eine pharmakologisch wirksame Substanz, wie zum Beispiel einen Wachstumsfaktor.

Alternativ oder zusätzlich kann auf den Partikeln eine Schicht aus gefrorenem Kohlendioxid gebildet sein. Die Kohlendioxidschicht hat den Vorteil, dass das Kohlendioxid beim Auftauen im biologischen Material verdampft, so dass zusätzlicher Platz für die Kultivierung und/oder einen Stofftransport am Depositionsort geschaffen wird.

Vorteilhafterweise bestehen verschiedene Möglichkeiten, die Teilportionen in den Aufnahmeelementen in den gefrorenen Zustand zu überführen. Erstens kann vorgesehen sein, dass die Aufnahmeelemente eine Temperatur oberhalb des Gefrierpunktes der Zellsuspension aufweisen und erst nach Aufnahme der Teilportionen abgekühlt werden. Alternativ ist eine Variante der Erfindung vorgesehen, bei der die Trägereinrichtung vorgekühlt ist. Die leeren Aufnahmeelemente sind auf eine Temperatur unterhalb des Gefrierpunktes der Suspension abgekühlt. Bei der Aufnahme der Teilportionen in den Aufnahmeelementen werden die Teilportionen sofort in den gefrorenen Zustand überführt. In diesem Fall können sich Vorteile durch eine hohe Geschwindigkeit der Beschickung der Aufnahmeelemente mit den Teilportionen und des Einfrierens der Teilportionen ergeben.

Gemäß einer weiteren besonders bevorzugten Ausführungsform der Erfindung kann vorgesehen sein, dass alle gefrorenen biologischen Partikel mit gleichen geometrischen Eigenschaften, insbesondere mit gleichen Größen, Formen und/oder Eigenschaften der Verteilung der zellulären Komponente innerhalb der Partikel hergestellt werden. Für diese Anwendung sind alle Aufnahmeelemente gleich gebildet. Erfindungsgemäß können große Partikelzahlen, insbesondere mindestens 10 Partikel, vorzugsweise mindestens 100 Partikel, wie zum Beispiel 500 oder 1000 Partikel oder mehr mit gleichen Eigenschaften hergestellt werden. Dies ermöglicht gleichartige und reproduzierbare Bedingungen der Deposition der Partikel im biologischen Material und der anschließenden Kultivierung im biologischen Material.

Alternativ oder zusätzlich kann vorgesehen sein, dass die gefrorenen biologischen Partikel nach der Trennung der Teilportionen von den Aufnahmeelementen mechanisch zerkleinert werden. Vorteilhafterweise kann damit die Partikelgröße an die Anforderungen bei einer konkreten Anwendung der Erfindung angepasst werden.

Weitere Vorteile der Erfindung können sich ergeben, wenn nach der Herstellung der gefrorenen biologischen Partikel deren weitere Bearbeitung (insbesondere Modifizierung, Nachbehandlung) vorgesehen ist. Die Bearbeitung umfasst eine Modifizierung von physikalischen (z. B. Erhöhung der Masse durch einen Substanzzusatz), chemischen (z. B. Oberflächenbehandlung der Partikel) und/oder biologischen (z. B. Zusatz einer biologisch wirksamen Substanz) Partikeleigenschaften.

Weitere Einzelheiten und Vorteile der Erfindung werden im Folgenden unter Bezug auf die beigefügten Zeichnungen beschrieben. Es zeigen:
- Figur 1:: eine schematische Schnittansicht einer Ausführungsform einer erfindungsgemäßen Einfriervorrichtung;
- Figur 2:: eine schematische Perspektivansicht der Kombination einer erfindungsgemäßen Trägereinrichtung mit einer Trenneinrichtung;
- Figur 3:: eine schematische Illustration verschiedener Varianten von erfindungsgemäß verwendeten Aufnahmeelementen;
- Figur 4:: Draufsichten auf verschiedene Varianten erfindungsgemäß verwendeter Trägereinrichtungen; und
- Figuren 5 bis 8:: verschiedene Varianten erfindungsgemäß hergestellter biologischer Partikel.

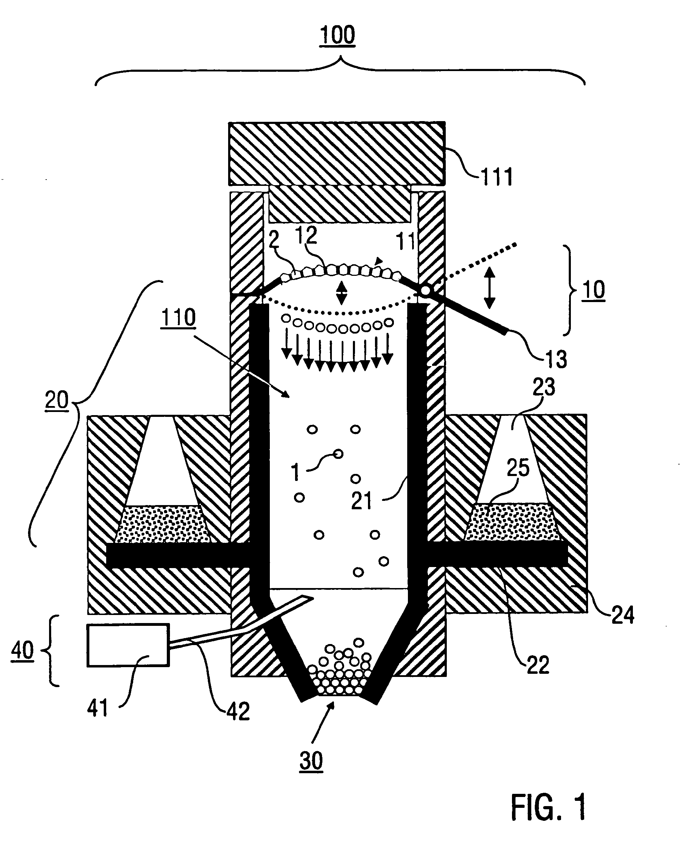

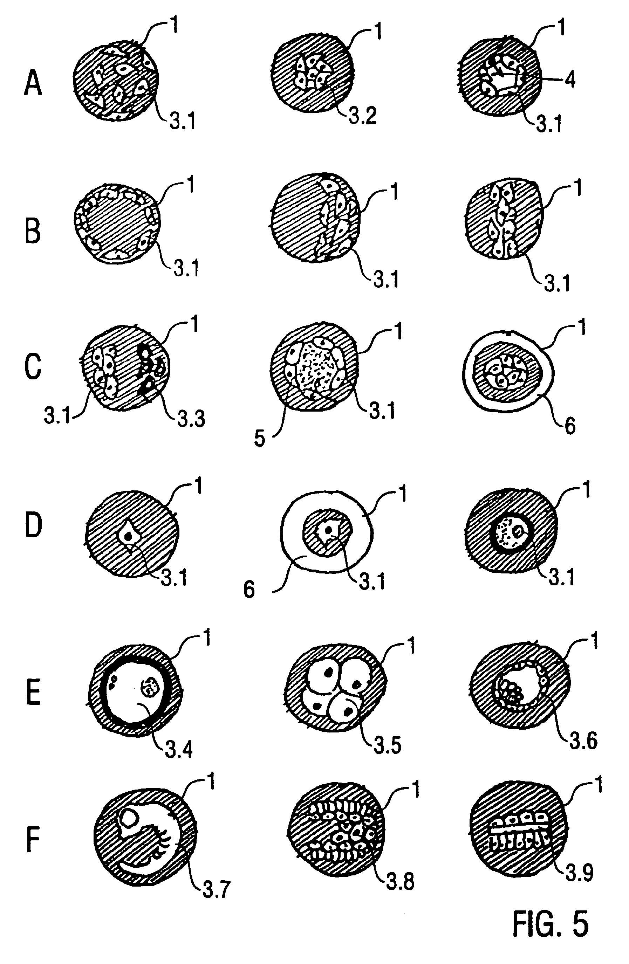

Einzelheiten bevorzugter Ausführungsform der erfindungsgemäß verwendeten Trägereinrichtung und der erfindungsgemäßen Einfriervorrichtung werden im Folgenden unter Bezug auf die schematischen Illustrationen in den Figuren 1 bis 4 erläutert. Es wird betont, dass die Umsetzung der Erfindung nicht auf die in diesen Figuren schematisch gezeigten Aufnahmeelemente mit Zylinder- oder Quaderformen beschränkt ist. Vielmehr können andere Formen realisiert werden, insbesondere wie sie in den Figuren 5 bis 8 illustriert sind, indem Aufnahmeelemente mit entsprechend abgewandelten Innenformen verwendet werden.

Figur 1 illustriert in schematischer Schnittansicht eine bevorzugte Ausführungsform einer erfindungsgemäßen Einfriervorrichtung 100 mit einer Trägereinrichtung 10, einer Kühleinrichtung 20 und einer Sammeleinrichtung 30. Die Trägereinrichtung 10 und die Kühleinrichtung 20 sind in einem gemeinsamen Behälter 110 angeordnet. Die Einfriervorrichtung 100 ist zur Herstellung einer Vielzahl von gefrorenen biologischen Partikeln 1 vorgesehen. Die Partikel 1 werden für eine Deposition in biologischem Material hergestellt, wie sie zum Beispiel in DE 10 2007 004 855 (deutsche Patentanmeldung, unveröffentlicht am Prioritätstag der vorliegenden Anmeldung) beschrieben ist.

Die Trägereinrichtung 10 umfasst eine Lochplatte 11 mit Löchern, welche die Aufnahmeelemente 12 bilden. Die Aufnahmeelemente 12 erstrecken sich über die Dicke der Lochplatte 11, so dass sie zweiseitig offen sind. Die Lochplatte 11 erstreckt sich über den Querschnitt des Innenraums des Behälters 110. Die Lochplatte 11 besteht aus einem elastisch deformierbaren Material, wie zum Beispiel aus einem Kunststoff- oder Metallgitter. Die Fläche der Lochplatte 11 ist größer als die Querschnittsfläche des Behälters 110. Da die Lochplatte 11 an der Innenwand des Behälters 110 befestigt ist, ergeben sich zwei stabile, obere und untere Positionen der Lochplatte 11. Durch eine Verbiegung der Lochplatte 11 kann diese zwischen den beiden Positionen umspringen, wodurch die Trennung der gefrorenen Teilportionen von den Aufnahmeelementen 12 bewirkt wird (siehe unten). Zur Verstellung der Lochplatte 11 zwischen den beiden Positionen ist die Trägereinrichtung 10 mit einem Hebel 13 ausgestattet, der auf der Außenseite des Behälters 110 betätigbar ist. Alternativ zu dem manuell betätigbaren Hebel 13 kann ein Motorantrieb zur Verstellung der Lochplatte 11 zwischen den stabilen Positionen vorgesehen sein.

Die Kühleinrichtung 20 umfasst Kühlschilde 21, die auf der Innenseite des Behälters 110 angeordnet und über Kühlbrücken 22 mit Kühlmittelreservoiren 23 auf der Außenseite des Behälters 110 in thermischer Verbindung stehen. Die Kühlschilde 21 und die Kühlbrücken 22 bestehen zum Beispiel aus Kupfer oder Stahl. Die Kühlmittelreservoire 23 sind in thermisch isolierten Kühlmittelbehältern 24 angeordnet und mit porösen Körpern 25 zur Aufnahme von flüssigem Stickstoff ausgestattet. Der flüssige Stickstoff hat eine Temperatur von minus 196°C. Durch den thermischen Kontakt über die Kühlbrücken 22 und den Kühlschild 21 wird im Innenraum des Behälters 110 eine Temperatur unterhalb von - 30°C, vorzugsweise unterhalb von - 130 °C eingestellt.

Das erfindungsgemäße Verfahren zur Herstellung der gefrorenen Partikel 1 umfasst gemäß einer bevorzugten Ausführungsform der Erfindung die folgenden Schritte. Zunächst wird durch eine obere Öffnung im Behälter 110 eine flüssige Zellsuspension, die eine zelluläre Komponente in einem Suspensionsmedium enthält, an der Trägereinrichtung 10 bereitgestellt. Teilportionen 2 der Zellsuspension sammeln sich in den Aufnahmeelementen 12 der Lochplatte 11. Die Zellsuspension wird beispielsweise in die einzelnen Aufnahmeelemente 12 mit einer Pipette eingetropft. Alternativ kann ein Aufgießen auf die Lochplatte 11 vorgesehen sein, wobei ein Überschuss der Suspension vermieden oder mit einer Auffangeinrichtung (nicht dargestellt) aufgefangen wird.

Anschließend erfolgt die Abkühlung der Trägereinrichtung 10 von einer Temperatur oberhalb auf eine Temperatur unterhalb des Gefrierpunkts der Zellsuspension. Die Abkühlung erfolgt vorteilhafterweise durch ein Verschließen des Behälters 110, insbesondere durch ein Aufsetzen eines Deckels 111 auf den Behälter 110. Wenn der Deckel 111 auf den Behälter 110 aufgesetzt ist, wird der obere Teil des Innenraums des Behälters 110 ausreichend abgekühlt, um die Teilportionen 2 in den Aufnahmeelementen 12 einzufrieren.

Um ein vollständiges Einfrieren der Teilportionen zu erreichen, genügt es, eine vorbestimmte Abkühlzeit zu warten. Die Abkühlzeit ist von thermischen Bedingungen im Behälter 110 und den Eigenschaften der Suspension abhängig und kann einfach durch Tests ermittelt werden. Alternativ kann eine Temperaturüberwachung mit einem Temperatursensor (nicht dargestellt) an der Lochplatte 11 vorgesehen sein, um festzustellen, dass die Lochplatte 11 die gewünschte Temperatur unterhalb des Gefrierpunkts der Suspension erreicht hat. Anschließend erfolgt die Bildung der gefrorenen biologischen Partikel 1 durch eine Trennung der Teilportionen 2 von den Aufnahmeelementen 12. Hierzu wird mit dem Hebel 13 die Lochplatte 11 von der oberen in die untere Position umgestellt. Aufgrund der elastischen Biegsamkeit der Lochplatte 11 erfolgt eine sprunghafte Bewegung in die untere Position, wobei die gefrorenen Teilportionen aus den Aufnahmeelementen 12 herausplatzen. Die gefrorenen Partikel fallen im Behälter 110 in den Sammelbereich 30. Dabei passieren sie die Kühlschilde 21, wobei eine weitere Abkühlung der Partikel 1 erreicht wird.

Optional kann die Einfriervorrichtung 100 mit einer Beschichtungseinrichtung 40 ausgestattet sein. Die Beschichtungseinrichtung 40 ist zur Beschichtung der gefrorenen biologischen Partikel 1 vorgesehen. Ein Beschichtungsmittel, wie zum Beispiel eine Wirksubstanz-Lösung oder gasförmiges Kohlendioxid wird von einem Beschichtungsmittelreservoir 41 über eine Leitung 42 in den Innenraum des Behälters 110 eingeführt. Das Austrittsende der Leitung 42, an dem eine Düse oder ein Kopf zur Verteilung des Beschichtungsmittels vorgesehen sein kann, ist auf einen Bereich oberhalb der Sammeleinrichtung 30 gerichtet. Die gefrorenen Partikel 1 fallen durch einen Vorhang des versprühten oder gasförmig einströmenden Beschichtungsmittels und werden dabei mit diesem beschichtet. Es ist nicht zwingend vorgesehen, dass die Beschichtung im unteren Bereich des Behälters 110 erfolgt. Alternativ kann die Beschichtungseinrichtung in einem oberen Bereich, zum Beispiel unmittelbar unter der Trägereinrichtung 10 angeordnet oder sogar auf die Trägereinrichtung 10 gerichtet sein. Im letzteren Fall erfolgt eine einseitige Beschichtung der gefrorenen Teilportionen 2 in den Aufnahmeelementen 12. Des Weiteren können mehrere Beschichtungseinrichtungen vorgesehen sein, mit denen ein oder mehrere Beschichtungsmittel von verschiedenen Seiten und/oder in verschiedenen Höhen im Behälter 110 mindestens ein Beschichtungsmittel den biologischen Partikeln 1 zu führen.

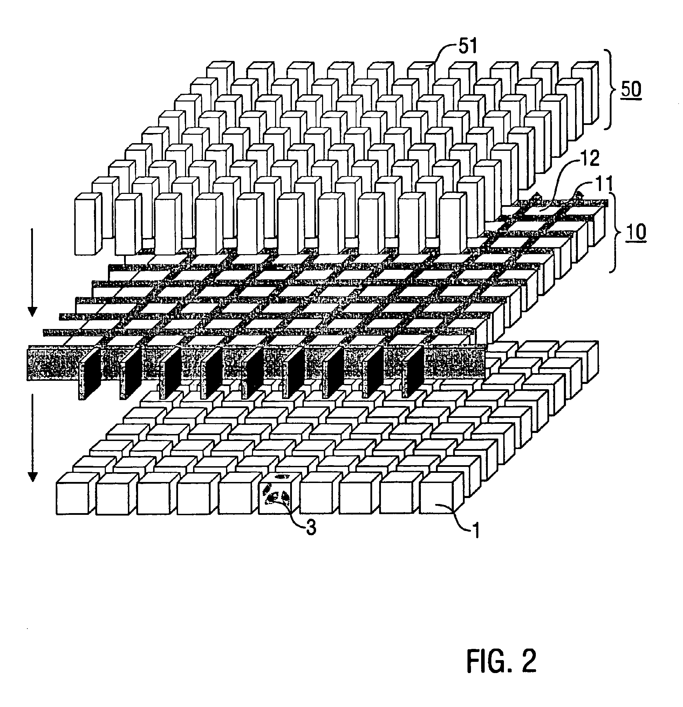

Figur 2 illustriert eine abgewandelte Ausführungsform der Erfindung, bei der die Trägereinrichtung 10 eine ebene Lochplatte 11 (insbesondere aus Kunststoff, z. B. eine Polymerverbindung, oder Metall, z. B. Stahl) umfasst. Die Aufnahmeelemente 12 werden durch die Löcher der Lochplatte 11 gebildet. Beim dargestellten Beispiel werden quaderförmige Aufnahmeelemente 12 gebildet, die alle die gleiche Form und Größe haben. Alternativ können z. B. zylinderförmige Aufnahmeelemente verwendet werden. Die Lochplatte 11 weist beispielsweise 90 Aufnahmeelemente 12 auf. Die Aufnahmeelemente 12 haben ein Volumen im Bereich von zum Beispiel 0,1 bis 8 mm³. Die Innenoberflächen der Aufnahmeelemente 12 sind vorzugsweise haftmindernd gebildet. Beispielsweise ist die Lochplatte 11 vollständig aus PTFE gebildet, oder die Innenoberflächen der Aufnahmeelemente 12 sind mit PTFE beschichtet.

Figur 2 illustriert des Weiteren eine Trenneinrichtung 50, die zur Trennung der gefrorenen Teilportionen aus den Aufnahmeelementen 12 zur Bildung der gefrorenen biologischen Partikel 1 vorgesehen ist. Die Trenneinrichtung 50 umfasst eine Vielzahl von Stempeln 51 mit einer geometrischen Anordnung, die gleich der geometrischen Anordnung der Aufnahmeelemente 12 ist. Jeder Stempel 51 passt in das entsprechende Aufnahmeelement 12. Mit den Stempeln 51 können die gefrorenen, quaderförmigen Teilportionen 2 aus der Lochplatte 11 herausgedrückt und zur weiteren Verwendung aufgefangen werden.

Die Trenneinrichtung 50 kann erfindungsgemäß in der Einfriervorrichtung 100 gemäß Figur 1 vorgesehen sein, um alternativ zu dem oben beschriebenen Hebelmechanismus die gefrorenen Partikel 1 mit der zellulären Komponente 3 aus der Lochplatte zu trennen.

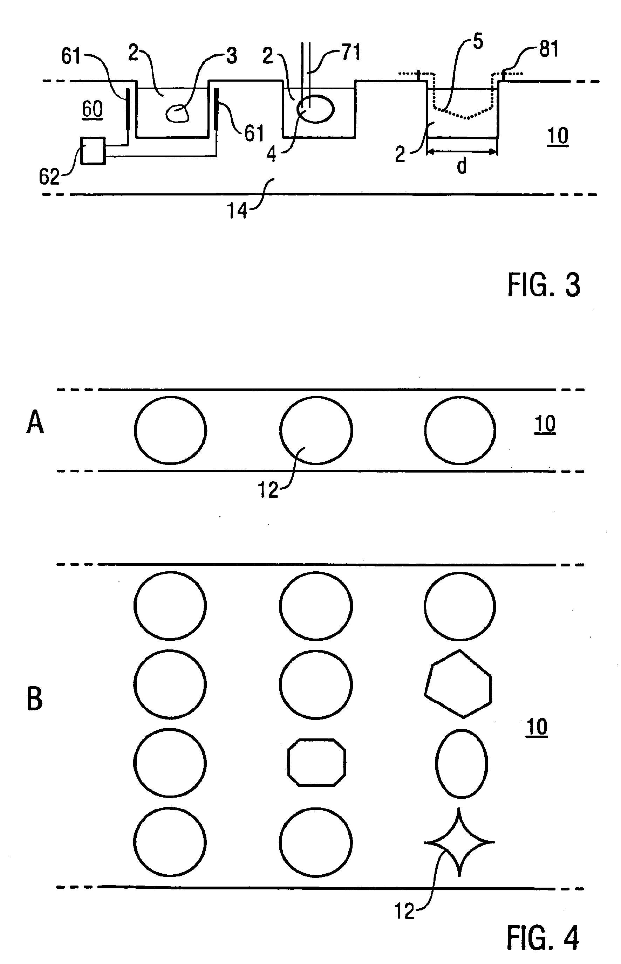

Figur 3 illustriert eine abgewandelte Variante einer Trägereinrichtung 10, bei der die Aufnahmeelemente 12 als Vertiefungen in der Oberfläche einer ebenen Substratplatte 14 gebildet sind. Im Unterschied zu der oben beschriebenen Lochplatte 11 weist die Trägereinrichtung 10 gemäß Figur 3 somit keine durchgehenden Öffnungen, sondern Aufnahmeelemente mit einer Topf-Form auf. Der Durchmesser d oder eine entsprechende Dimension eines zur offenen Seite weisenden Querschnitts der Aufnahmeelemente 12 beträgt z. B. 500 µm. Die Aufnahmeelemente 12 sind einseitig offen. Die Innenoberflächen der Aufnahmeelemente 12 können haftmindernd gebildet, z. B. mit PTFE beschichtet sein. Das Material (z. B. Kunststoff, Metall, Keramik) und die Dicke (z. B. 1 bis 4 mm) der Substratplatte 14 sind so gewählt, dass eine flexible Biegsamkeit selbst bei Temperaturen unterhalb des Gefrierpunktes der Zellsuspension erhalten bleibt. Figur 3 illustriert des Weiteren verschiedene Varianten von Zusatzeinrichtungen, die an Aufnahmeelementen vorgesehen sein können.

So können die Aufnahmeelemente 12 mit einer Stelleinrichtung 60 ausgestattet sein. Beim dargestellten Beispiel umfasst die Stelleinrichtung 60 zwei Elektroden 61, die außerhalb des Aufnahmeelements 12, zum Beispiel in dessen Wand oder im Körper der Substratplatte 14 angeordnet sind. Die Elektroden 61 sind mit einer Steuerspannungsquelle 62 verbunden und dazu vorgesehen, die zelluläre Komponente 3 in der Zellsuspension im Aufnahmeelement 12 zum Beispiel durch Dielektrophorese in einem bestimmten Teilbereich der Teilportion 2 zu fokussieren (sammeln). Die Einstellung der geometrischen Position der zellulären Komponente erfolgt im flüssigen Zustand der Teilportion 2. Anschließend wird die Teilportion 2 abgekühlt und in den gefrorenen Zustand überführt, in dem die Anordnung der zellulären Komponente erhalten bleibt.

Des Weiteren kann mit einer Hohlleitung 71 ein Hohlraum 4 in der Teilportion 2 erzeugt werden. Die Hohlleitung 71 ist mit einer Fluidquelle verbunden, mit der wahlweise ein Gas zur Bildung des Hohlraums 4 im flüssigen Zustand der Teilportion 2 oder ein verflüssigtes Gas zur Füllung des Hohlraums 4 im gefrorenen Zustand der Teilportion 2 zugeführt werden kann. Die Hohlleitung 71, die z. B. aus einer Kohlenhydrat-Verbindung besteht, kann auch nach Bildung des gefrorenen Partikels mit diesem verbunden und im biologischen Material deponiert werden.

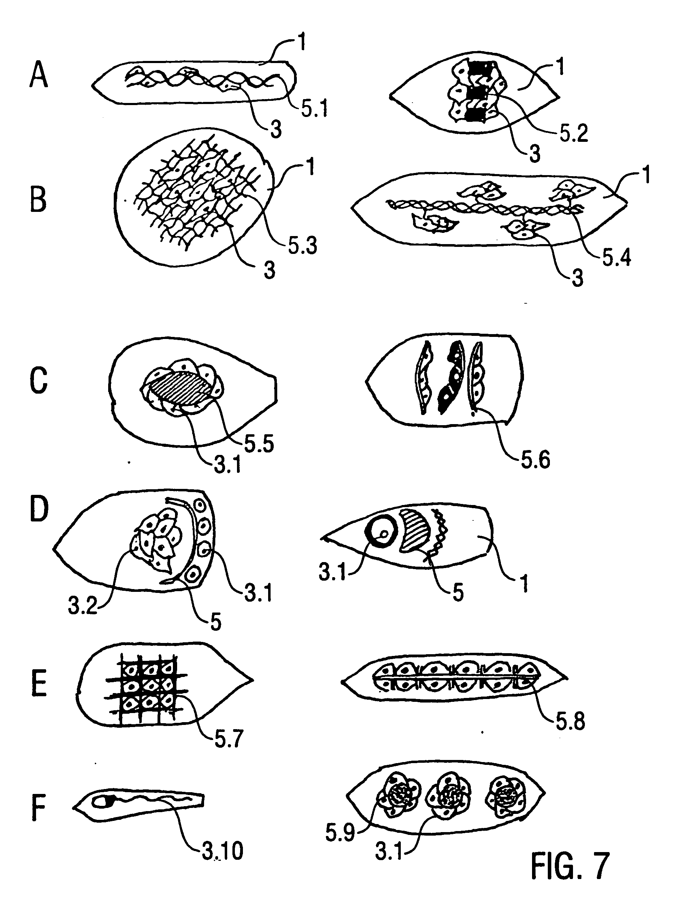

Schließlich illustriert Figur 3 schematisch die Bereitstellung eines fadenförmigen Festkörperelements 5 am Aufnahmeelement 12. Das Festkörperelement 5 kann bei der Aufnahme der Suspension in dem Aufnahmeelement 12 vorgesehen und mit der Teilportion 2 eingefroren werden. Beispiele von Festkörperelementen 5 werden unten insbesondere unter Bezug auf Figur 7 erläutert. Das Festkörperelement 5 wird mit einer Halteeinrichtung 81 am Aufnahmeelement 12 fixiert, die z. B. eine Klemme am Rand des Aufnahmeelements 12 umfasst.

Figur 4 illustriert schematisch zwei Varianten der Anordnung von Aufnahmeelementen 12 einer Trägereinrichtung 10. Gemäß Figur 4A ist eine lineare Reihe von Aufnahmeelementen 12 vorgesehen, während gemäß Figur 4B eine zweidimensionale Anordnung der Aufnahmeelemente 12 gebildet ist. Des Weiteren illustriert Figur 4B beispielhaft, dass die Aufnahmeelemente abweichend von der Zylinder- oder Quaderform eine andere Querschnittsform mit unregelmäßigen, geraden oder gekrümmten Wänden aufweisen kann, um die unten beschriebenen Formen gefrorener biologischer Partikel bereitzustellen. Abweichend von der Illustration haben vorzugsweise alle Aufnahmeelemente einer Trägereinrichtung die gleiche Größe und Form.

Die Figuren 5 bis 7 illustrieren beispielhaft verschiedene Formen und Zusammensetzungen von gefrorenen biologischen Partikeln, die mit dem erfindungsgemäßen Verfahren herstellbar sind. Die illustrierten biologischen Partikel sind insbesondere für die Deposition in biologischem Material, z. B. Zellschichten, Gewebeverbänden, Körperoberflächen (Haut oder Wundbereiche bei Operationen) oder Innenflächen von Hohlorganen, vorgesehen. Die Figuren zeigen beispielhaft die geometrische Form der Partikel und die Position einer zellulären Komponente in diesen. Die Erfindung ist nicht auf die gezeigten Varianten beschränkt, sondern in Abhängigkeit von der konkreten Anwendung mit abgewandelten Formen und Eigenschaften der zellulären Komponente realisierbar. Die gefrorenen biologischen Partikel sind schematisch vergrößert gezeigt. Eine typische Querschnittsdimension (zum Beispiel Durchmesser, maximale Querschnittsdicke oder Länge) der Partikel ist typischerweise im Bereich von 3 µm bis 5 mm, insbesondere von 10 µm bis 3 mm gewählt. Das Partikelvolumen ist vorzugsweise größer als 100 µm³ und kleiner als 20 mm³. Es wird beispielhaft auf Partikel Bezug genommen, die als zelluläre Komponente mindestens eine Zelle und/oder mindestens eine Zellgruppe enthalten. In entsprechender Weise kann mindestens ein Zellbestandteil, insbesondere mindestens eine Zellorganelle, z. B. mindestens ein Zellkern oder mindestens ein Mitochondrium, in den Partikeln eingebettet sein.

Figur 5 zeigt gefrorene biologische Partikel 1, die einen kreisförmigen Querschnitt aufweisen. Die Partikel 1 können zum Beispiel kugelförmig oder zylinderförmig sein. Kugelförmige Partikel 1 werden in Aufnahmeelementen gebildet, deren Innenraum eine Halbkugelform aufweist. Die Kugelform des Partikels wird in diesem Fall durch die Innenform und die freie Oberfläche der halben, aus dem Aufnahmeelement sich wölbenden, tropfenförmigen Teilportion der Zellsuspension gebildet. Die Zylinderform wird durch Aufnahmeelemente mit einer zylinderförmigen Innenform gebildet, die einseitig (Substratplatte) oder zweiseitig (Gitterplatte) offen ist. Die in den Zeilen A bis F von Figur 5 gezeigten Varianten kugel- oder zylinderförmiger Partikel 1 unterscheiden sich in der Art und Positionierung der zellulären Komponente und der eventuellen Modifizierung der Partikel durch einen Hohlraum und/oder eine Beschichtung.

Gemäß Zeile A in Figur 5 umfasst die zelluläre Komponente eine Vielzahl gleichmäßig verteilter biologischer Zellen 3.1 (links), eine Zellgruppe 3.2 (Mitte), die mit einer Stelleinrichtung (siehe Figur 3) in der Mitte des Partikels 1 positioniert ist, oder mehrere Zellen 3.1, die an einer Grenzfläche zwischen einem Hohlraum 4 im Inneren des Partikels 1 und dem gefrorenen Suspensionsmedium angeordnet sind. Zeile B von Figur 5 zeigt weitere Varianten der inhomogenen Verteilung biologischer Zellen 3.1 im Partikel 1. Die Zellen 3.1 können zum Beispiel nahe der Oberfläche des Partikels 1 (links), in einer Hälfte des Partikels 1 (Mitte) oder in der Mitte des Partikels 1 (rechts) gesammelt sein. Die Sammlung der Zellen 3.1 erfolgt beispielsweise mit der in Figur 3 gezeigten Stelleinrichtung unter der Wirkung hochfrequenter elektrischer Felder, wenn sich die Teilportion der Suspension im flüssigen Zustand im Aufnahmeelement befindet.

Gemäß Zeile C in Figur 5 kann die zelluläre Komponente biologische Zellen 3.1, 3.3 verschiedener Zellarten (z. B. Stammzellen, differenzierte Zellen) umfassen, die in verschiedenen Teilen des Partikels 1 (zum Beispiel polständig in kugelförmigen Partikeln) voneinander getrennt angeordnet sind. Das mittlere Bild in Zeile C in Figur 5 illustriert einen Partikel 1, in dessen Mitte ein kugel- oder zylinderförmiges Festkörperelement 5 oder in einem entsprechend geformten Hohlraum 4 ein verflüssigtes Gas angeordnet ist. Die Zellen 3.1 sind an der Grenzfläche zwischen dem Festkörperelement 5 und dem angrenzenden gefrorenen Suspensionsmedium angeordnet. Zusätzlich kann gemäß dem rechten Teilbild in Zeile C eine Beschichtung 6 vorgesehen sein. Die Beschichtung 6 besteht zum Beispiel aus einer Substanz, mit der das Auftauen des deponierten Partikels 1 beeinflusst wird (zum Beispiel Verdünnung eines Kryoprotektivums) oder eine Wirksubstanz (zum Beispiel einen Wachstumsfaktor, mit dem die Kultivierung beeinflusst wird).

Gemäß Zeile D in Figur 5 kann die zelluläre Komponente in den Partikel 1 aus einer einzigen Zelle 3.1 bestehen, die zum Beispiel im gefrorenen Suspensionsmedium (links), in einem gefrorenen Suspensionsmedium mit einer Hüllmedium-Beschichtung 6, wie zum Beispiel gefrorenem CO₂ oder Medium ohne ein Kryoprotektivum (Mitte) oder in einem komplex zusammengesetzten Suspensionsmedium mit verschiedenen, getrennten Bestandteilen (rechts) angeordnet ist. Die einzelne Zelle kann zum Beispiel eine Eizelle 3.4 sein (Zeile E, links).

Weitere Entwicklungsstadien zellulärer Komponenten in erfindungsgemäß hergestellten biologischen Partikeln 1 sind in den Zeilen E und F in Figur 5 dargestellt. So illustriert das linke Teilbild in Zeile E die einzelne Eizelle 3.4 mit einer dünnen Beschichtung des Suspensionsmediums (Dicke zum Beispiel 5 µm), während die weiteren Bilder ein Vier-Zell-Stadium eines Embryos 3.5 (E, Mitte), eine Blastozyste 3.6 (E, rechts), einen frühen tierischen Fötus 3.7 (F, links), eine geordnete Zellstruktur, wie zum Beispiel eine Haarfollikel oder einen Stammzellenverbund (F, Mitte) oder ein Gewebeteil 3.9 (F, rechts) umfassen.

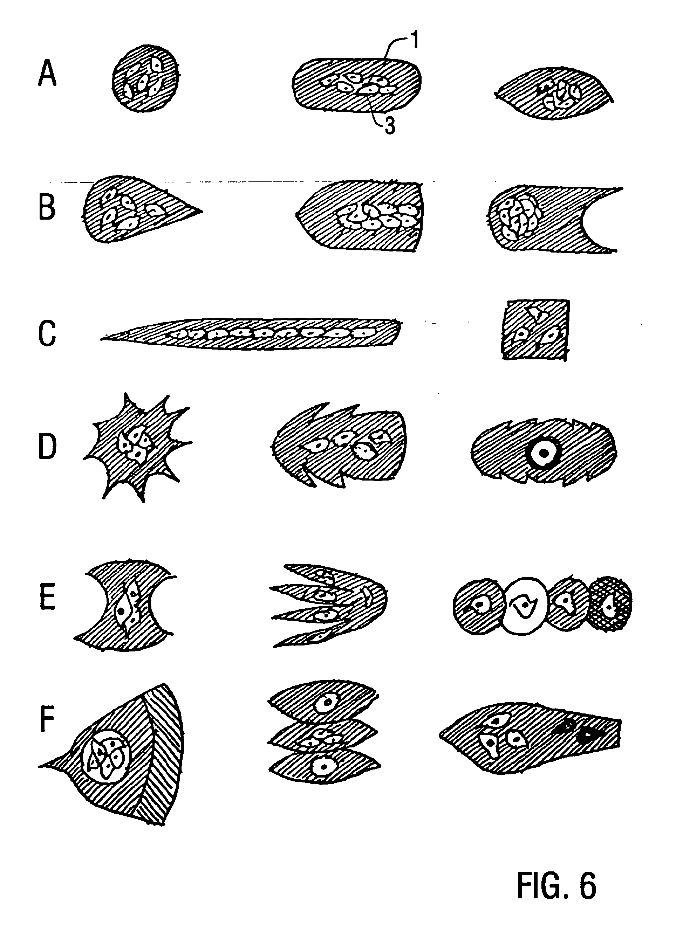

Figur 6 illustriert verschiedene Formen der gefrorenen biologischen Partikel 1, die jeweils eine zelluläre Komponente 3 in einem Suspensionsmedium (schraffiert gezeigt) enthalten. Die Partikel können entsprechend den Varianten in Figur 5 modifiziert sein. Die Herstellung der Partikel 1 gemäß Figur 6 erfolgt mit angepasst geformten Aufnahmeelementen. Die Formen in den Zeilen A bis C können Querschnitt- oder Längsschnittformen der Partikel darstellen. In diesen Fällen können die Aufnahmeelemente für eine beschädigungsfreie Trennung der gefrorenen Teilportionen von den Aufnahmeelementen ausgelegt sein. Dies gilt insbesondere auch für die Formen in Zeile E (rechts) und F (links, rechts). Die Formen mit spitzen Partikelbereichen (Zeile D, Zeile E, links, Mitte), Zeile F (Mitte) hingegen können lediglich in Aufnahmeelementen geformt werden, deren Querschnittform der gewünschten Form entspricht und zu einer Seite hin offen ist.

Figur 7 illustriert verschiedene Varianten von Partikeln 1, die zusätzlich zu der zellulären Komponente 3 (zum Beispiel einzelne Zellen oder Zellgruppen) zusätzlich ein Festkörperelement 5 enthalten. Das Festkörperelement 5 kann mindestens einen Festkörperpartikel oder ein Gewebeelement, wie zum Beispiel einen Faden oder ein Netz umfassen. Die in Figur 7 gezeigten Varianten können entsprechend den Ausführungsformen in den Figuren 5 und 6 modifiziert sein.

Gemäß Zeile A in Figur 7 ist als Festkörperelement 5 ein Gewebeband 5.1 (links) oder ein Netz oder Sieb 5.2 (rechts) vorgesehen. Ein Festkörperelement kann gemäß Zeile B in Figur 7 ein Geflecht 5.3 oder ein geklöppeltes oder gestricktes Gewebe aus Einzelfäden (links) oder ein Filamentbündel 5.4 (rechts) umfassen. Die Gewebe bestehen zum Beispiel aus Wollfäden, Garn und/oder Kunststoff-Fasern. Von besonderem Vorteil kann die Verwendung von biologisch abbaubarem (insbesondere resorbierbarem) Material, wie zum Beispiel Nahtmaterial für chirurgische Anwendungen, sein. Zeile C in Figur 7 illustriert Varianten mit einem Festkörperpartikel 5.5, insbesondere einem Festkörperimplantat, zum Beispiel aus Titan, Gold oder einem Kunststoff (links) oder Membran- oder Folienelementen 5.6 (rechts). Der Festkörperpartikel kann wie dargestellt als Träger der Zellen 3.1 und/oder zur Erhöhung des Gewichts der Partikel 1 (Einstellung der Eindringtiefe im biologischen Material) dienen.

Die Zeilen D, E und F (rechts) zeigen weitere Varianten mit einzelnen Zellen 3.1 und Zellgruppen 3.2, die mit einzelnen oder mehreren Festkörperelementen 5 in den Partikeln 1 angeordnet sein können. In Zeile F (links) ist eine Variante gezeigt, bei der ein einzelnes Spermium 3.10 im Partikel 1 angeordnet ist. Auch in diesem Fall kann zusätzlich mindestens ein Festkörperelement vorgesehen sein.

Gemäß Zeile D (rechts) können die Zelle 3.1 und verschiedene Festkörperelemente 5 im Partikel 1 voneinander getrennt angeordnet sein. In diesem Fall ist ein gegenseitiger Kontakt erst nach dem Auftauen im biologischen Material vorgesehen. Die Kultivierung der Zelle 3.1 wird durch die Festkörperelemente 5 im biologischen Material beeinflusst. Die Zeilen E und F illustrieren des Weiteren, dass das Festkörperelement 5 ein Gitter 5.7 oder einen segmentierten Stab 5.8 umfassen kann. Zeile F (rechts) zeigt eine Reihe von mehreren kugelförmigen Festkörperelementen 5.9, die jeweils Zellen 3.1 tragen.

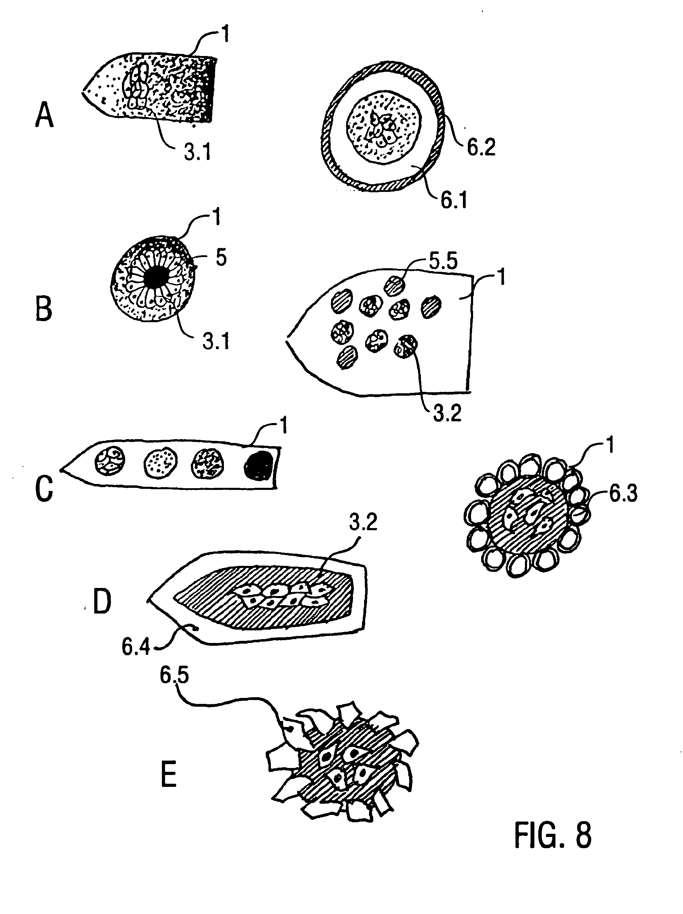

In Figur 8 sind gefrorene biologische Partikel mit komplexeren Zusammensetzungen illustriert, die mit dem erfindungsgemäßen Verfahren herstellbar sind. Gemäß Zeile A (links) enthält der gefrorene Partikel 1 eine Zellgruppe 3.2 im Suspensionsmedium, das mit einem Konzentrationsgradienten von mindestens einer im Suspensionsmedium enthaltenen Substanz (zum Beispiel Wachstumsfaktor, Kryoprotektivum, Farbstoff, Hormon oder dergleichen) eingefroren wurde. Vorteilhafterweise kann damit die Freisetzung der Substanz beim Auftauen im biologischen Material und damit die weitere Kultivierung der Zellgruppe 3.2 gezielt beeinflusst werden. Zeile A (rechts) zeigt einen mehrschaligen Aufbau des Partikels 1, bei dem mehrere Beschichtungen 6.1, 6.2, zum Beispiel aus CO₂ und/oder Wirksubstanzen vorgesehen sind.

Die Bildung eines Gradienten im gefrorenen Suspensionsmedium ist auch in Zeile B (links) in Figur 8 gezeigt. Eine Vielzahl von Zellen 3.1 sind radial allseitig auf einem Festkörperelement 5 gewachsen, wobei im umgebenden gefrorenen Suspensionsmedium im oberen Teil des Partikels 1 eine höhere Konzentration einer Substanz gegeben ist als im unteren Teil. Zeile B (rechts) zeigt einen Partikel 1 mit einer Vielzahl von Zellgruppen 3.2., die voneinander getrennt im gefrorenen Suspensionsmedium enthalten sind. Des Weiteren können im Partikel 1 mehrere Festkörperelemente, zum Beispiel Festkörperpartikel 5.5 angeordnet sein. Diese Ausführungsform kann gemäß Zeile C (links) so modifiziert sein, dass die im Partikel 1 enthaltenen Teile der zellulären Komponente und Festkörperelemente in einer vorbestimmten geordneten Reihenfolge verteilt sind.

Zeile C (rechts) illustriert einen Partikel 1, auf dessen Oberfläche eine Schicht gefrorener Vesikeln 6.3 (oder anderer flüssigkeits- oder gasgefüllter Körper) angeordnet ist. Die Vesikeln 6.3 können im Aufnahmeelement der erfindungsgemäßen Einfriervorrichtung als Teil des Partikels oder nach der Trennung der gefrorenen Partikel von der Trägereinrichtung mit der Beschichtungseinrichtung (siehe zum Beispiel Figur 1) aufgetragen werden. Die Beschichtung 6.3 kann vorteilhafterweise den Aufprall des Partikels 1 bei der Deposition im biologischen Material ergänzen und/oder bei der Einbettung im biologischen Material Substanzen, wie zum Beispiel Anästhetika oder Antibiotika freisetzen.

Im unteren Teil von Figur 8 (D, E) sind weitere Varianten biologischer Partikel 1 mit einer geschlossenen Schicht 6.4 aus gefrorenem Kohlendioxid oder einer Kristallitschicht 6.5 aus Oberflächenkristallen, zum Beispiel aus wässrigen Lösungen oder aus Kohlendioxid, gezeigt.

Die in Figur 8 gezeigten Ausführungsformen erfindungsgemäß hergestellter gefrorener Partikel können entsprechend den Varianten in den Figuren 5, 6 und 7 modifiziert sein.

Erfindungsgemäß kann nach der Herstellung der gefrorenen biologischen Partikel eine Zerkleinerung der gefrorenen biologischen Partikel eine Zerkleinerung der Partikel zur Bildung von Kristalliten mit Spitzen und scharfen Kanten vorgesehen sein. Die Zerkleinerung erfolgt beispielsweise unter Verwendung eines mechanischen Werkzeugs.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Herstellung einer Vielzahl von gefrorenen biologischen Partikeln (1), die zur Deposition in biologischem Material geeignet sind, mit den Schritten:
- Bereitstellung einer flüssigen Suspension mit einer zellulären Komponente (3, 3.1 - 3.10), die mindestens eines von mindestens einer biologischen Zelle, mindestens einer Zellgruppe und mindestens einem Zellbestandteil umfasst,
- Aufnahme von Teilportionen (2) der Suspension in Aufnahmeelementen (12) einer Trägereinrichtung (11), und
- Abkühlung der Trägereinrichtung (10) und Einfrieren der Teilportionen der Suspension, wodurch die gefrorenen biologischen Partikel (1) mit einer Innenform und Innengröße der Aufnahmeelemente gebildet werden,
**gekennzeichnet durch** den weiteren Schritt:
- Trennung der gefrorenen biologischen Partikel (1) von den Aufnahmeelementen (12).

2. Verfahren gemäß Anspruch 1, bei dem
- die Trägereinrichtung (10) eine Lochplatte (11) mit Löchern aufweist, welche die Aufnahmeelemente (12) bilden, und die gefrorenen biologischen Partikel (1) in den Löchern der Lochplatte (11) geformt werden, oder
- die Trägereinrichtung eine Substratplatte (14) mit Vertiefungen aufweist, welche die Aufnahmeelemente (12) bilden, und die gefrorenen biologischen Partikel in den Vertiefungen der Substratplatte (14) geformt werden.

3. Verfahren gemäß einem der vorhergehenden Ansprüche, bei dem die Trennung der gefrorenen biologischen Partikel von den Aufnahmeelementen (12) umfasst:
- ein Ausdrücken aus den Aufnahmeelementen (12) unter Verwendung einer Trenneinrichtung (50), und/oder
- eine Deformation der Trägereinrichtung (10), wobei die gefrorenen biologischen Partikel (1) von den Aufnahmeelementen abplatzen (12).

4. Verfahren gemäß einem der vorhergehenden Ansprüche, bei dem
- eine geometrische Anordnung der zellulären Komponente (3, 3.1 - 3.10) in den Teilportionen (2) eingestellt wird, wenn diese sich in den Aufnahmeelementen (12) befinden,
- mindestens ein Festkörperelement (5, 5.1 - 5.9) mindestens einer der Teilportionen (2) zugefügt wird, wenn diese sich in den Aufnahmeelementen befindet,
- die Aufnahmeelemente (12) eine Temperatur unterhalb des Gefrierpunktes der Suspension aufweisen, so dass die Teilportionen (2) während der Bereitstellung der Suspension auf der Trägereinrichtung (10) in den gefrorenen Zustand überführt werden,
- alle gefrorenen biologischen Partikel mit der gleichen Größe und Form hergestellt werden, und/oder
- eine Bearbeitung der gefrorenen biologischen Partikel vorgesehen ist, die eine Modifizierung von physikalischen, chemischen und/oder biologischen Partikeleigenschaften umfasst.

5. Verfahren gemäß Anspruch 4, bei dem
- die Einstellung der geometrischen Anordnung der zellulären Komponente (3, 3.1 - 3.10) durch mechanische, elektrische oder magnetische Kräfte erfolgt.

6. Verfahren gemäß einem der vorhergehenden Ansprüche, mit dem Schritt
- Bildung von mindestens einem Hohlraum (4) in mindestens einer der Teilportionen (2).

7. Verfahren gemäß Anspruch 6, mit dem Schritt
- Füllung des mindestens einen Hohlraums (4) mit einem verflüssigten Gas.

8. Verfahren gemäß Anspruch 4, bei dem
- das mindestens eine Festkörperelement (5, 5.1 - 5.9) mindestens einen Festkörperpartikel oder mindestens ein Gewebeelement umfasst.

9. Verfahren gemäß einem der vorhergehenden Ansprüche, mit dem Schritt
- Beschichtung der gefrorenen Partikel, und/oder
- mechanische Zerkleinerung der gefrorenen biologischen Partikel.

10. Verfahren gemäß Anspruch 9, bei dem die Beschichtung umfasst
- die Bildung einer Schicht (6, 6.1, 6.2) mindestens einer Wirksubstanz, und/oder
- die Bildung einer Schicht (6, 6.1, 6.2) aus gefrorenem Kohlendioxid.

11. Einfriervorrichtung (100) zur Herstellung einer Vielzahl von gefrorenen biologischen Partikeln, umfassend:
- eine Trägereinrichtung (10) mit einer Vielzahl von Aufnahmeelementen (12), die zur Aufnahme von Teilportionen (2) einer flüssigen Suspension mit einer zellulären Komponente (3, 3.1 - 3.10), die mindestens eines von mindestens einer biologischen Zelle, mindestens einer Zellgruppe und mindestens einem Zellbestandteil umfasst, eingerichtet sind und mit denen die Teilportionen (2) formbar sind, und
- eine Kühleinrichtung (20), mit der die Teilportionen (2) in den Aufnahmeelementen (12) eingefroren werden können, wodurch die gefrorenen biologischen Partikel (1) mit einer Innenform und Innengröße der Aufnahmeelemente (12) gebildet werden,
**dadurch gekennzeichnet, dass**
- die Kühleinrichtung (20) zur Einstellung einer Temperatur der Teilportionen (2) unterhalb von - 30 °C eingerichtet ist, und
- die Aufnahmeelemente (12) für eine Trennung der gefrorenen biologischen Partikel aus den Aufnahmeelementen (12) eingerichtet sind.

12. Einfriervorrichtung gemäß Anspruch 11, bei der
- die Trägereinrichtung (10) eine Lochplatte (11) mit Löchern aufweist, welche die Aufnahmeelemente (12) bilden, oder
- die Trägereinrichtung eine Substratplatte (14) mit Vertiefungen aufweist, welche die Aufnahmeelemente (12) bilden.

13. Einfriervorrichtung gemäß einem der Ansprüche 11 bis 12, bei der
- die Aufnahmeelemente (12) eine Größe derart aufweisen, dass die Teilportionen (2) der Suspension unter der Wirkung von Kapillarkräften in den Aufnahmeelementen (12) haften,
- die Aufnahmeelemente (12) eine Größe derart aufweisen, dass mindestens eine Querschnittsdimension der Aufnahmeelemente kleiner als 5 mm, insbesondere kleiner als 1 mm ist,
- die Aufnahmeelemente (12) eine Innenoberfläche mit einer derartigen Haftfähigkeit aufweisen, dass die gefrorenen biologischen Partikel von den Aufnahmeelementen mechanisch lösbar sind, und/oder
- die Aufnahmeelemente (12) mindestens eine der Formen aufweisen, welche eine Kugelform, eine Halbkugelform, eine Quaderform, eine Ellipsoidform, eine Stabform, eine Pyramidenform, eine Kegelform, eine Spitzenform und eine Form mit einer Vielzahl von Spitzen umfassen.

14. Einfriervorrichtung gemäß einem der Ansprüche 11 bis 13, die umfasst:
- eine Trenneinrichtung (50), die zum Ausdrücken der gefrorenen Partikel aus den Aufnahmeelementen (12) eingerichtet ist,
- an mindestens einem der Aufnahmeelemente eine Stelleinrichtung (60), die zur Einstellung der geometrischen Anordnung der zellulären Komponente (3, 3.1 - 3.10) in der Teilportion (2) in dem Aufnahmeelement (12) durch mechanische, elektrische und/oder magnetische Kräfte eingerichtet ist, und/oder
- eine Beschichtungseinrichtung (40), die zur Beschichtung der gefrorenen Partikel eingerichtet ist.

15. Einfriervorrichtung gemäß einem der Ansprüche 11 bis 14, bei der
- die Trägereinrichtung (10) derart deformierbar ist, dass bei einer Deformation die gefrorenen Partikel von den Aufnahmeelementen abplatzen,
- an mindestens einem der Aufnahmeelemente (12) eine Hohlleitung (71) angeordnet ist, die zur Bildung eines Hohlraums (4) in der Teilportion in dem Aufnahmeelement eingerichtet ist, und/oder
- an mindestens einem der Aufnahmeelemente eine Halteeinrichtung (81) angeordnet ist, die zur Halterung eines Festkörperelements (5, 5.1 - 5.9) in der Teilportion (2) in dem Aufnahmeelement (12) eingerichtet ist.

## Claims

1. A method for producing a plurality of frozen biological particles (1) which are suitable for deposition in biological material, with the steps:
- providing a liquid suspension with a cellular component (3, 3.1 - 3.10), which comprises at least one of at least one biological cell, at least one cell group and at least one cell constituent,
- accommodating part portions (2) of the suspension in accommodation elements (12) of a support device (11), and
- cooling the support device (10) and freezing the part portions of the suspension, as a result of which frozen biological particles (1) are formed with an internal shape and internal size of the accommodation elements,
**characterized by** the further step:
- separating the frozen biological particles (1) from the accommodation elements (12).

2. The method according to claim 1, wherein
- the support device (10) has a perforated plate (11) with holes which form the accommodation elements (12), and the frozen biological particles (1) are formed in the holes of the perforated plate (11), or
- the support device has a substrate plate (14) with depressions which form the accommodation elements (12), and the frozen biological particles are shaped in the depressions of the substrate plate (14).

3. The method according to any one of the preceding claims, wherein the separation of the frozen biological particle from the accommodation elements (12) comprises:
- pushing out from the accommodation elements (12) using a separation device (50), and/or
- deforming the support device (10), wherein the frozen biological particles (1) peel off from the accommodation elements (12).

4. The method according to any one of the preceding claims, wherein
- a geometric arrangement of the cellular component (3, 3.1 - 3.10) is set up in the part portions (2) when the same are located in the accommodation elements (12),
- at least one solid element (5, 5.1 - 5.9) is added to at least one of the part portions (2) when the same is located in the accommodation elements,
- the accommodation elements (12) have a temperature below the freezing point of the suspension, so that the part portions (2) are transfered to the frozen state during the provision of the suspension on the support device (10),
- all frozen biological particles are produced with the same size and shape, and/or
- a processing of the frozen biological particles is provided, which comprises a modification of physical, chemical and/or biological particle properties.

5. The method according to claim 4, wherein
- the setting up of the geometric arrangement of the cellular component (3, 3.1 - 3.10) takes place by means of mechanical, electrical or magnetic forces.

6. The method according to any one of the preceding claims, comprising the step of:
- forming at least one cavity (4) in at least one of the part portions (2).

7. The method according to claim 6, comprising the step of:
- filling the at least one cavity (4) with a liquefied gas.

8. The method according to claim 4, wherein
- the at least one solid element (5, 5.1 - 5.9) comprises at least one solid particle or at least one tissue element.

9. The method according to any one of the preceding claims, comprising the step of:
- coating the frozen particles, and/or
- mechanically comminuting the frozen biological particles.

10. The method according to claim 9, wherein the coating comprises
- forming a layer (6, 6.1, 6.2) of at least one active substance, and/or
- forming a layer (6, 6.1, 6.2) of frozen carbon dioxide.

11. A freezing apparatus (100) for producing a plurality of frozen biological particles, comprising:
- a support device (10) with a plurality of accommodation elements (12) which are adapted for accommodating part portions (2) of a liquid suspension with a cellular component (3, 3.1 - 3.10), which comprises at least one of at least one biological cell, at least one cell group and at least one cell constituent, and with which the part portions (2) can be shaped, and
- a cooling device (20), with which the part portions (2) can be frozen in the accommodation elements (12), as a result of which the frozen biological particles (1) are formed with an internal shape and internal size of the accommodation elements (12), **characterized in that**
- the cooling device (20) is adapted for setting a temperature of the part portions (2) below -30°C, and
- the accommodation elements (12) are adapted for a separation of the frozen biological particles from the accommodation elements (12).

12. A freezing apparatus according to claim 11, wherein
- the support device (10) has a perforated plate (11) with holes which form the accommodation elements (12), or
- the support device has a substrate plate (14) with depressions which form the accommodation elements (12).

13. The freezing apparatus according to any one of claims 11 to 12, wherein
- the accommodation elements (12) have such a size that the part portions (2) of the suspension adhere in the accommodation elements (12) under the action of capillary forces,
- the accommodation elements (12) have such a size that at least one cross-sectional dimension of the accommodation elements is smaller than 5 mm, particularly smaller than 1 mm,
- the accommodation elements (12) have an internal surface with such an adhesiveness that the frozen biological particles can be mechanically detached from the accommodation elements, and/or
- the accommodation elements (12) have at least one of the shapes which comprise a spherical shape, a hemispheric shape, a cuboidal shape, an ellipsoidal shape, a rod shape, a pyramidal shape, a cone shape, a peaked shape and a shape with a plurality of peaks.

14. The freezing apparatus according to any one of claims 11 to 13, which comprises:
- a separation device (50) which is adapted for pushing the frozen particles out of the accommodation elements (12),
- on at least one of the accommodation elements, an adjustment device (60), which is adapted for setting the geometric arrangement of the cellular component (3, 3.1 - 3.10) in the part portion (2) in the accommodation element (12) by means of mechanical, electrical and/or magnetic forces, and/or
- a coating device (40) which is adapted for coating the frozen particles.

15. The freezing apparatus according to any one of claims 11 to 14, wherein
- the support device (10) can be deformed in such a manner that the frozen particles peel off from the accommodation elements during a deformation,
- on at least one of the accommodation elements (12), a hollow line (71) is arranged which is adapted for forming a cavity (4) in the part portion in the accommodation element, and/or
- a holding device (81) is arranged on at least one of the accommodation elements, which is adapted for holding a solid element (5, 5.1 - 5.9) in the part portion (2) in the accommodation element (12).

## Revendications

1. Procédé de production d'une multiplicité de particules biologiques congelées (1) qui sont appropriées pour le dépôt dans un matériau biologique, comportant les étapes suivantes:
- mise à disposition d'une suspension liquide comportant un composant cellulaire (3, 3.1 à 3.10) qui comprend au moins un composant parmi au moins une cellule biologique, au moins un groupe de cellules et au moins un composant cellulaire,
- réception de parties partielles (2) de la suspension dans des éléments de réception (12) d'un dispositif de support (11), et
- refroidissement du dispositif de support (10) et congélation des parties partielles de la suspension, les particules biologiques congelées (1) étant ainsi formées avec une forme intérieure et une taille intérieure des éléments de réception,
**caractérisé par** l'étape supplémentaire de:
- séparation des particules biologiques congelées (1) des éléments de réception (12).

2. Procédé selon la revendication 1, dans lequel
- le dispositif de support (10) présente une plaque perforée (11) dotée de trous qui forment les éléments de réception (12) et les particules biologiques congelées (1) sont formées dans les trous de la plaque perforée (11), ou
- le dispositif de support présente une plaque de substrat (14) comportant des cavités qui forment les éléments de réception (12) et les particules biologiques congelées sont formées dans les cavités de la plaque de substrat (14).

3. Procédé selon l'une des revendications précédentes, dans lequel la séparation des particules biologiques congelées des éléments de réception (12) comprend:
- une extraction hors des éléments de réception (12) en utilisant un dispositif de séparation (50), et/ou
- une déformation du dispositif de séparation (10), les particules biologiques congelées (1) étant éjectées des éléments de réception (12).

4. Procédé selon l'une des revendications précédentes, dans lequel
- une disposition géométrique des composants cellulaires (3, 3.1 à 3.10) s'effectue dans les parties partielles (2) lorsque celles-ci se trouvent dans les éléments de réception (12),
- au moins un élément de corps solide (5, 5.1 à 5.9) est ajouté à au moins l'une des parties partielles (2) lorsque celle-ci se trouve dans les éléments de réception,
- les éléments de réception (12) présentent une température inférieure au point de congélation de la suspension, de sorte que les parties partielles (2) soient acheminées à l'état congelé pendant la mise à disposition de la suspension, sur le dispositif de support (10),
- toutes les particules congelées sont produites avec les mêmes tailles et formes, et/ou
- un traitement des particules biologiques congelées est prévu, qui comprend une modification des propriétés physiques, chimiques et/ou biologiques des particules.

5. Procédé selon la revendication 4, dans lequel
- l'ajustement de la disposition géométrique des composants cellulaires (3, 3.1 à 3.10) s'effectue par des forces mécaniques, électriques ou magnétiques.

6. Procédé selon l'une des revendications précédentes, comportant l'étape de
- formation d'au moins un espace creux (4) dans au moins l'une des parties partielles (2).

7. Procédé selon la revendication 6, comportant l'étape de
- remplissage d'au moins un espace creux (4) avec un gaz liquéfié.

8. Procédé selon la revendication 4, dans lequel
- au moins un élément de corps solide (5, 5.1 à 5.9) comprend au moins une particule de corps solide ou au moins un élément tissulaire.

9. Procédé selon l'une des revendications précédentes, comportant l'étape de
- revêtement des particules congelées, et/ou
- broyage mécanique des particules biologiques congelées.

10. Procédé selon la revendication 9, dans lequel le revêtement comprend
- la formation d'une couche (6, 6.1, 6.2) d'au moins une substance active, et/ou
- la formation d'une couche (6, 6.1, 6.2) de dioxyde de carbone congelé.

11. Congélation (100) pour la production d'une multiplicité de particules biologiques congelées, comprenant:
- un dispositif de support (10) comportant une multiplicité d'éléments de réception (12) qui sont conçus pour recevoir des parties partielles (2) d'une suspension liquide avec un composant cellulaire (3, 3.1 à 3.10) qui comprend au moins un composant parmi au moins une cellule biologique, au moins un groupe de cellules et au moins un composant cellulaire et avec lesquels les parties partielles peuvent être formées, et
- un dispositif de refroidissement (20) avec lequel les parties partielles (2) peuvent être congelées dans les éléments de réception (12),
les particules biologiques congelées (1) étant ainsi formées avec une forme intérieure et une taille intérieure des éléments de réception (12),
**caractérisée en ce que**
- le dispositif de refroidissement (20) est conçu pour régler une température des parties partielles (2) à moins de - 30° C et
- les éléments de réception (12) sont conçus pour une séparation des particules biologiques congelées des éléments de réception (12).

12. Dispositif de congélation selon la revendication 11, dans lequel
- le dispositif de support (10) présente une plaque perforée (11) dotée de trous qui forment les éléments de réception (12) ou
- un dispositif de support forme une plaque de substrat (14) doté de cavités qui forment les éléments de réception (12).

13. Dispositif de congélation selon l'une des revendications 11 à 12, dans lequel
- les éléments de réception (12) présentent une taille telle que les parties partielles (2) de la suspension adhèrent sous l'effet de forces capillaires aux éléments de réception (12),
- les éléments de réception (12) présentent une taille telle qu'au moins une dimension de section transversale des éléments de réception est inférieure à 5 mm, en particulier inférieure à 1 mm,
- les éléments de réception (12) présentent une surface interne dotée d'une capacité d'adhérence telle que les particules biologiques congelées peuvent être détachées mécaniquement des éléments de réception, et/ou
- les éléments de réception (12) présentent au moins l'une des formes comprenant une forme sphérique, une forme hémisphérique, une forme carrée, une forme ellipsoïdale, une forme de bâtonnet, une forme pyramidale, une forme conique, une forme pointue et une forme présentant une multiplicité de pointes.

14. Dispositif de congélation selon l'une des revendications 11 à 13, qui comprend:
- un dispositif de séparation (50) qui est conçu pour extraire les particules congelées des éléments de réception (12),
- sur au moins l'un des éléments de réception est aménagé un système de commande (60) qui est conçu pour ajuster la disposition géométrique des composants cellulaires (3, 3.1 à 3.10) dans la partie partielle (2) dans l'élément de réception (12) par des forces mécaniques, électriques et/ou magnétiques, et/ou
- un dispositif de revêtement (40) est conçu pour le revêtement des particules congelées.

15. Dispositif de congélation selon l'une des revendications 11 à 14, dans lequel
- le dispositif de support (10) peut être déformé de telle sorte que, lors d'une déformation, les particules congelées sont éjectées des éléments de réception,
- sur au moins l'un des éléments de réception (12) est aménagée une conduite creuse (71) qui est conçue pour la formation d'un espace creux (4) dans la partie partielle dans l'élément de réception, et/ou
- sur au moins l'un des éléments de réception est aménagé un dispositif de retenue (81) qui est conçu pour retenir l'un des éléments de corps solide (5, 5.1 à 5.9) dans la partie partielle (2) dans l'élément de réception (12).
